(19) **Europäisches Patentamt**

**European Patent Office**

**Office européen des brevets**

(11) **EP 1 091 530 A2**

(12) **EUROPEAN PATENT APPLICATION**

(43) Date of publication:
**11.04.2001 Bulletin 2001/15**

(51) Int Cl.⁷: $H04L\ 12/56$

(21) Application number: **00440242.6**

(22) Date of filing: **08.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.10.1999 AU 5270099**

(71) Applicant: **ALCATEL**
**75008 Paris (FR)**

(72) Inventors:
• **Cox, Michael**
  **Jannali, New South Wales 2226 (AU)**
• **Vucic, Mickey**
  **Killara, New South Wales 2071 (AU)**
• **Banh, Bui Anh Jonathan**
  **Burwood, New South Wales 2134 (AU)**

(74) Representative: **Schäfer, Wolfgang, Dipl.-Ing.**
**Dreiss, Fuhlendorf, Steimle & Becker**
**Postfach 10 37 62**
**70032 Stuttgart (DE)**

(54) **Traffic allocation on virtual trunks**

(57)     A data network using a maximal flow algorithm uses all available paths between a source and a destination, providing a more efficient use of the network than the shortest path networks. To facilitate the exchange of network status information, particularly in a maximal flow context, a plurality of parallel paths formed of one or more nodes 2001... 2017 and node links 3001 ... 3020, are formed into groups 4001 ... 4003 connected by group links 5001, 5002. The paths within a group between the group links are notionally reduced to a single equivalent, 6001 ... 6003, path with the aggregate dynamic capacity of the individual paths. In this way the network can be reduced to a serial connection of links between source and destination. Preferably a node in each group 4001 ... 4003 provides group status information to the other groups to enable each group to determine the overall traffic status of the network.

FIGURE 1

## Description

### Technical Field

This invention provides an improved traffic routing tool.

### Background Art

In data networks, particularly those carrying traffic having a guaranteed quality of service, a known method of determining the route of traffic across a network is the shortest path method which requires that each terminal have a map of the network so that the path with the least number of links between the sending and receiving terminals can be determined. Our invention, described in Australian Patent application No. 44470/99 (Docket No. 127045), entitled "Maximal Flow Data Routing" describes an improved path selection algorithm which distributes the traffic over all practical available links between the sender and receiver.

Our co-pending Australian Application No. 47400/99 (Docket No. 127064) entitled "Recursive Traffic Distribution IP/Data Network Model" describes a data structure for reporting the load status of the network, for use in distributing traffic to links so that traffic is preferentially assigned to the more lightly loaded links.

### Disclosure of the Invention

This invention facilitates the determination of the network load status by treating parallel paths as a single link.

Preferably one of the nodes in each group of parallel paths is designated as a master node and collates the load status for the nodes and links in the designated group, and broadcasts an overall load status report for the group.

Each group of nodes and links is connected to an adjacent group via at least one inter-group link. The receiving node of each group, i.e. the node connected to the inter-group link, has available to the details of the load status of all the other nodes and links in its group and uses the load sharing algorithm to distribute the traffic across the paths within the group.

This process reduces the amount of load status report traffic on the network, and simplifies the routing of a message across the network. It is not necessary for the sending node to have detailed load status data for each node and link in the network. Routing and distribution across a group is carried out by the inter group link node which receives the traffic.

### Brief Description of the Invention

Figure 1    represents a network of nodes and links.

Figure 2    represents a network including notional links produced by notionally combining parallel paths in accordance with an embodiment of this invention.

Figure 3    represents a group of nodes.

Figure 4    represents header information utilized in implementing an embodiment of the invention.

Figure 5    represents a schematic arrangement for routing traffic according to an embodiment of the invention.

### Best Method of Carrying out the Invention

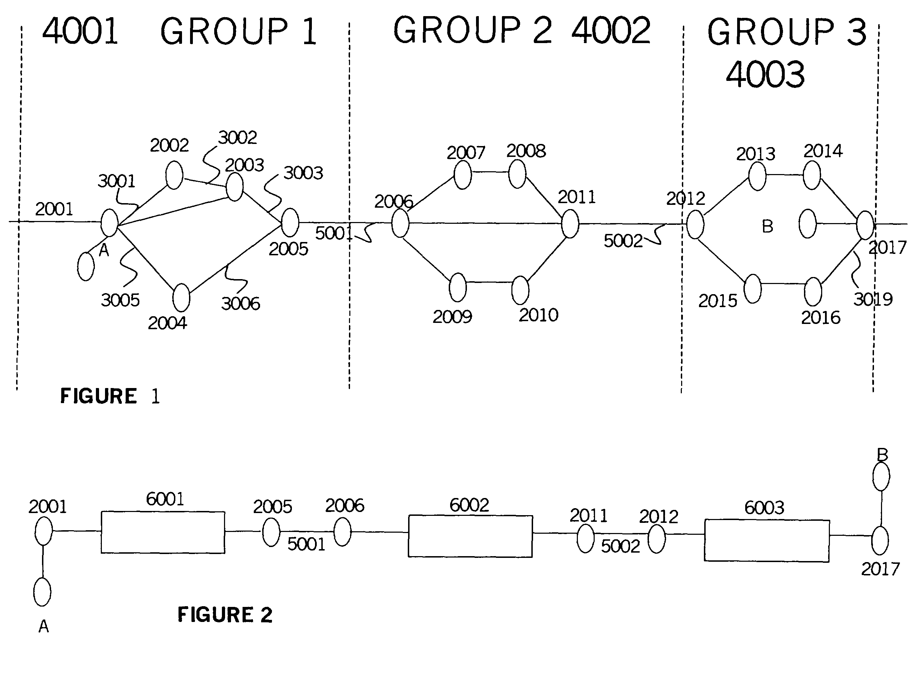

Figure 1 represents a network of nodes 2001 ... 2017, interconnected by node links 3001 to 3019. The nodes are arranged in groups 4001, 4002, 4003. The groups are interconnected by group links 5001, 5002.

Generally speaking, each group of nodes will provide at least one, and usually multiple paths across the group from one group link to another group link.

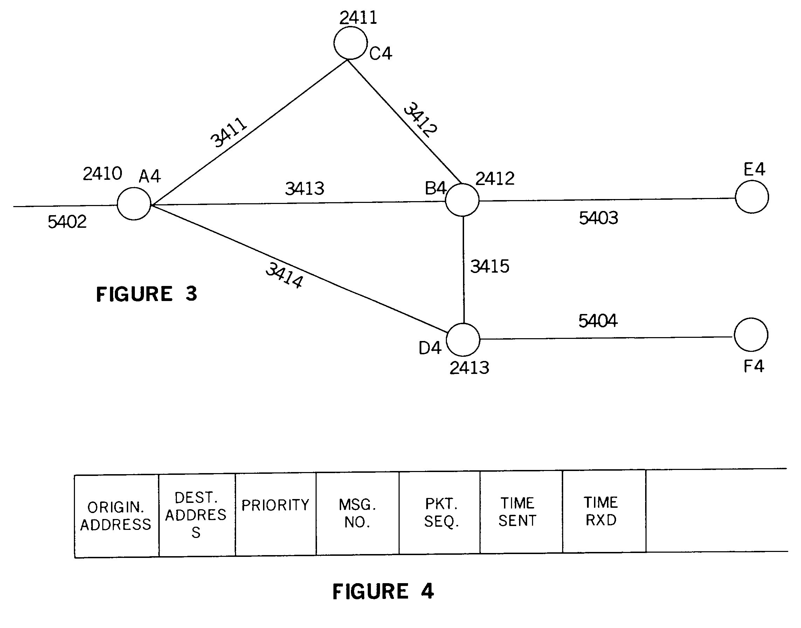

In the embodiment shown in Figure 3, a group 4004 is illustrated, and the nodes have been labelled as follows:

    2410 = A4
    2411 = C4
    2412 = B4
    2413 = D4

When traffic enters group 4004 via group link 5402 it may be directed to an internal node or it may transit the group towards node E4 or node F4 on corresponding group links 5403 and 5404. In the case where nodes E4 and F4 belong to different groups the path selection is as follows.

Traffic directed to E4 has 3 possible paths: A4.B4.E4, A4.C4.B4.E4, A4.D4.B4.E4.

None of these paths use the same internal node links within the group.

Traffic directed to F4 has 3 possible paths: A4.D4.F4, A4.B4.D4.F4, A4.C4.B4.D4.F4.

The same link B4D4 is used in the second and third of these paths. To optimize the traffic across the groups to E4, node A needs to determine whether path A4B4 or path A4C4B4 has the greater available capacity, and, where latency is critical as determined by the priority of the traffic, which path meets the latency requirements. To enable a node to determine these factors, each message header should include priority information in addition to destination and origin information. Preferably, time information is associated with each message. The time information may be an absolute time stamp (the time when the message was initially transmitted), or sequence information ( the sequence of the block of data in an overall message). Additionally, time information may include the time when the data was received at the node. ( relative time information).

Where traffic is directed towards F4, A4 has three choices A4D4, A4B4D4, A4C4B4D4, but the second and third choices include the same link B4D4, assuming that all the links have the same available capacity, the load should be distributed 50% to A4D4, 25% A4B4D4, and 25% A4C4B4D4, rather than 1/3 to each because of the common link. The actual load status of each link would then be taken into consideration to determine the actual load distribution. For example if link A4D4 were fully loaded and link A4B4 had half the available capacity of links A4C4 & C4B4, 2/3 of the traffic should be assigned to A4C4B4D4 and 1/3 to A4B4D4.

The above example illustrates the factors which a group master node would take into account is determining the available capacity across the group from one group link to another.

Using the all practical paths distribution described in our Application No. 44470/99 (Docket No. 127045), the network between two terminals A, connected to node 2001 in Group 1 (4001) and B connected to node 2017 in Group 3 (4003), the network between A & B can be condensed to a series of nodes and links as shown in Figure 2.

As shown in Figure 2, each group, 4001, 4002, 4003, is reduced to a pair of nodes, 2001/2005, 2006/2011, 2012/2017, interconnected by corresponding hypothetical equivalent single links 6001, 6002, 6003.

The hypothetical links represent the available useable capacity between the corresponding nodes.

Thus link 6001 represents the available useable capacity on the paths between node 2001 and node 2005 of Group 1.

Our Application No. 47400/99 (127064) discloses a technique where each node and link in a group, and at least one node in each group receives overall load status information for each other group or aggregation of groups in the network. This information is sufficient to enable the hypothetical equivalent links to be constructed.

Figure 4 illustrates header information which may be included in the message packets to facilitate reconstitution of the message after transmission across a network using the "all paths" technique. Typically the information may include:

Originating address;
Destination address;
Priority;
Message Number;
Packet Sequence number;

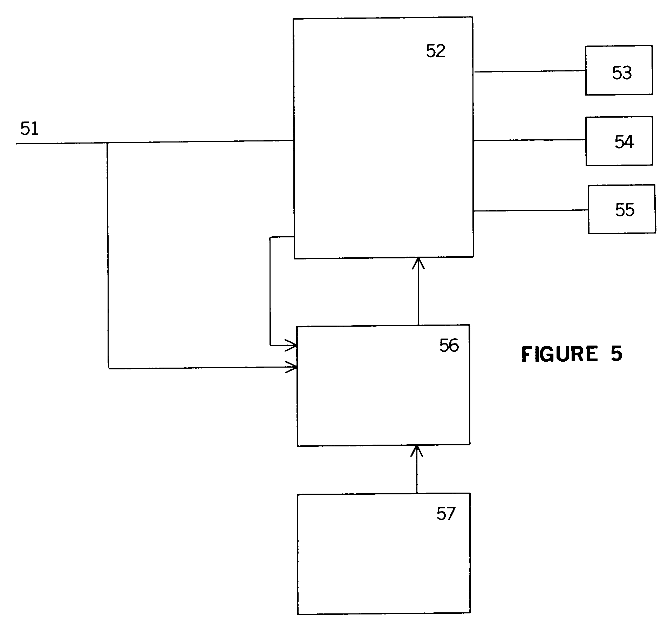

Figure 5 illustrates schematically a mechanism within a node for distributing incoming messages to outgoing links.

Incoming messages on link 51 are stored in buffer 52 for transmission to other links or nodes 53, 54, 55.

Control means receives the header information and uses the destination, time stamp, priority, temporary buffer address of a message etc to determine the output to which a message is to be connected. The control means also has access to network map and load status information 57, and decides how much traffic can be allocated to each link.

To determine the capacity available between node 2001 and 2005, assume that the link between 3001 has a capacity C1, link 3002 has a capacity C2, link 3003 has capacity C3, link 3004 has capacity C4, link 3005 has capacity C5, and link 3006 has capacity C6, and that all nodes are non-blocking.

Thus there are 3 paths having the following links:

Path 1 = 3001, 3002, 3003
Path 2 = 3004, 3003
Path 3 = 3005, 3006

If C3 > (C2 + C4), both paths 1 and 2 are fully available, and limited respectively by the smallest capacity link in each path. Suppose that C2 is the smallest capacity link in Path 1. Then the maximum capacity of Path 1 is C2. Similarly, where C4< C3, C4 is the smallest capacity link in Path 3. Thus the overall maximum capacity between 2001 and 2005 is C2+C4+C5.

This maximum capacity varies with the loads on the links, and this load information is exchanged between the nodes of a group. Because there may be both intra-group and transgroup traffic, the smallest link in a path may not be the limiting factor in a path if the traffic on one of the other links in the path reduces its available capacity.

Because the load status information of all the links in a group is available and regularly updated, the available capacity of the equivalent link can be calculated. For example, in the equivalent link limited by C2, C4 and C5, assume that C2 has 60% available capacity, C4 has 75% available capacity and C5 has 100% available capacity. The overall available capacity of the notional equivalent link, CE, is calculated as follows:

$$CE = 0.6 \, C2 + 0.75 \, C4 + C5$$

More generally,

$$CE = x_1.C_1 + x_2.C_2 + ... + x_n.C_n$$

Where $x_n C_n$ is the available capacity of the link having the least available capacity in Path n, $x_n$ being the available fraction of the link having capacity $C_n$.

**Claims**

1.  A traffic routing tool for use in a network of nodes interconnected by node links in which groups of nodes are interconnected by group links,

    -   wherein the tool dynamically determines the available traffic capacity between a source and a destination using all practical paths,

    -   wherein, within each group of nodes is notionally reduced to a corresponding equivalent link between an associated pair of nodes in the source/destination path, the equivalent single path representing the available capacity between the associated pair of nodes.

2.  A method for routing traffic in a network of nodes interconnected by node links in which groups of nodes are interconnected by group links,

    -   wherein the tool dynamically determines the available traffic capacity between a source and a destination using all practical paths,

    -   wherein, within each group of nodes is notionally reduced to a corresponding equivalent link between an associated pair of nodes in the source/destination path, the equivalent single path representing the available capacity between the associated pair of nodes.

3.  A traffic routing arrangement for routing each message on an incoming link to one or more outgoing links, the arrangement including:

    -   buffer means to store incoming message;

    -   control means to determine the destination of each incoming message from destination information in the message header;

    -   the control means having access to network layout information and network load status information;

    -   whereby the traffic routing arrangement routes each message to one or more output links on the basis of all practical paths to the destination determined from the, destination information, the network layout information, and the network load status information.

4.  An arrangement as claimed in wherein the network information includes notional equivalent links representing the available capacity of groups of parallel paths.

5.  A traffic routing arrangement substantially as herein described with reference to the accompanying drawings.

6.  A traffic routing tool substantially as herein described with reference to the accompanying drawings.

7.  A method of routing traffic substantially as herein described with reference to the accompanying drawings.

EP 1 091 530 A2

4001  GROUP 1     GROUP 2 4002    GROUP 3
                                   4003

3002
2002
2003
3001      3003
2001
2006      2007 2008    2013 2014    2012
A         2011
2005
5001  B
2009 2010   2015 2016
3005      3006
2004      5002      3019
2017

FIGURE 1

2001  6001  2005 2006  6002  2011 2012  6003  B
A  5001  5002  2017

FIGURE 2

**FIGURE 3**

EP 1 091 530 A2

| ORIGIN. ADDRESS | DEST. ADDRESS | PRIORITY | MSG. NO. | PKT. SEQ. | TIME SENT | TIME RXD | |
|---|---|---|---|---|---|---|---|
| | | | | | | | |

**FIGURE 4**

FIGURE 5